Europäisches Patentamt

European Patent Office

Office européen des brevets

(19)

(11) Veröffentlichungsnummer : **0 087 508**
**B1**

(12) **EUROPÄISCHE PATENTSCHRIFT**

(45) Veröffentlichungstag der Patentschrift :
26.06.85

(51) Int. Cl.⁴ : **B 60 K 15/02**

(21) Anmeldenummer : **82110804.0**

(22) Anmeldetag : **23.11.82**

(54) **Saugvorrichtung.**

(30) Priorität : **25.02.82 DE 3206721**
**27.07.82 DE 3227929**

(43) Veröffentlichungstag der Anmeldung :
**07.09.83 Patentblatt 83/36**

(45) Bekanntmachung des Hinweises auf die Patenterteilung : **26.06.85 Patentblatt 85/26**

(84) Benannte Vertragsstaaten :
**DE FR GB IT**

(56) Entgegenhaltungen :
**DE-A- 3 005 535**
**US-A- 3 311 266**
**US-A- 3 833 124**
**US-A- 4 260 341**

(73) Patentinhaber : **VDO Adolf Schindling AG**
**Gräfstrasse 103**
**D-6000 Frankfurt/Main (DE)**

(72) Erfinder : **Rau, Karl**
**Blumenstrasse 20**
**D-6052 Mühlheim (DE)**

(74) Vertreter : **Könekamp, Herbert, Dipl.-Ing.**
**Sodener Strasse 9**
**D-6231 Schwalbach (DE)**

Jouve, 18, rue St-Denis, 75001 Paris, France

**Beschreibung**

Die Erfindung bezieht sich auf eine Saugvorrichtung für ein Brennstofförderaggregat, mit einem starren Saugrohr, an dem ein Saugkopf angeordnet ist, dessen mit einem Sieb versehene Saugöffnung unter federnder Vorspannung am Boden eines Brennstoffbehälters in Anlage gehalten ist.

Eine derartige bekannte Saugvorrichtung besitzt einen Saugkopf, der mit einem Führungsrohr versehen und mit diesem auf dem Saugrohr verschiebbar angeordnet ist. Das dem Boden des Brennstoffbehälters zugewandte Ende ist radial erweitert und trägt das Sieb. Durch eine Feder wird der Saugkopf in Anlage am Boden des Brennstoffbehälters gehalten.

Diese Ausbildung hat den Nachteil, daß sie viele einzelne Bauteile besitzt, die die Saugvorrichtung teuer machen und einen erhöhten Montageaufwand erfordern.

Es ist daher Aufgabe der Erfindung, eine Saugvorrichtung nach dem Überbegriff zu schaffen, die bauteilarm ist und mit nur geringem Aufwand montierbar ist.

Diese Aufgabe wird erfindungsgemäß dadurch gelöst, daß der Saugkopf als sich kegelförmig erweiternder, elastischer Balg ausgebildet ist, in dessen großer, dem Boden zugewandter Saugöffnung das Sieb angeordnet ist. Durch die kegelförmige Ausgestaltung des Saugkopfes kann auf jegliche Führungselemente verzichtet werden, ohne daß es zu einem Ausknicken des Balges kommen kann. Gleichzeitig kann sich aber die Ebene der Saugöffnung vollkommen der Veränderung der Ebene des Bodens des Brennstoffbehälters anpassen. Dies ist wichtig, da dieser meist dünnwandige Boden sich in Abhängigkeit von der Füllung des Brennstoffbehälters mehr oder weniger durchwölbt. Diese Anpassung der Saugöffnung an den Boden gewährleistet ein weitgehend vollständiges Ansaugen von Brennstoff durch das Brennstofförderaggregat. Durch diese selbsttätige optimale Anpassung kann auf jegliche Anpassungsarbeiten bei der Montage der Saugvorrichtung verzichtet werden. Diese Vorteile werden erzielt bei gleichzeitig einfachstem Aufbau der Saugvorrichtung.

Besitzt der Balg eine wellförmige Kontur, so ist die Stabilität gegen Ausknicken besonders hoch. Es kommt nämlich nicht zu einem Biegevorgang an den spitzwinkligen Verbindungsstellen zwischen jeweils zwei Flanken des Balges, sondern zu einem Biegevorgang der sich über die gesamten Wellen der wellförmigen Kontur des Balges erstreckt. Dadurch ist es trotz hoher Flexibilität möglich, eine relativ hohe elastische Spannung des Balges zu erreichen.

Zur einfachen Montage kann der Balg mit seinem Ende geringen Durchmessers auf das Ansaugrohr aufknüpfbar sein, wobei zur Sicherung vorzugsweise der Balg von einer sein Ende geringen Durchmessers umschließenden Rohrschelle auf dem Saugrohr verspannbar ist.

Auf einfache und billige Weise ist der Balg als Spritzgußteil herstellbar.

Um ein ungehindertes Einströmen des Brennstoffs in die Saugöffnung zu gewährleisten, können am Balg zum Boden des Brennstoffbehälters hin hervorstehende Abstandshalter angeordnet sein. Diese können auf einfache Weise dadurch hergestellt werden, wenn die Abstandshalter am Balg angeformte Noppen sind.

Zu einer einfachen Montierbarkeit führt es, wenn das Sieb zumindest in seinem radial umlaufenden Randbereich starr ausgebildet und in den Balg einknüpfbar ist. Dabei können am Sieb zum Boden des Brennstoffbehälters hin hervorstehende Abstandshalter angeformt sein.

Die Montierbarkeit wird sehr stark vereinfacht, wenn die Innenwand der Saugöffnung des Balges etwa zylindrisch und mit einer radial umlaufenden Ringnut ausgebildet ist, in die das Sieb mit seinem radial umlaufenden Rand einknüpfbar ist. Dabei können die Abstandshalter eine radial nach außen größere Erstreckung aufweisen als der Innendurchmesser der Saugöffnung des Balges, so daß sie gleichzeitig als die Einschubtiefe begrenzender Anschlag bei der Montage des Siebes dienen.

Billig herstellbar ist das Sieb, wenn es ein Spritzgußteil ist.

Nach einer weiteren vorteilhaften Ausbildung der Erfindung kann der Balg aus einem in Kraftstoff sein Volumen vergrößernden Material bestehen und am Mündungsrand seiner Saugöffnung von einem radial umlaufenden starren Rand des aus einem in Kraftstoff formbeständigen Material bestehenden Siebes umschlossen sein. Dabei besteht der Balg vorzugsweise aus einem in Kraftstoff quellenden Kunststoff. Dadurch können Balg und Sieb so ausgelegt sein, daß der Balg bei der Montage leichtgängig in den umlaufenden starren Rand des Siebes einführbar ist. Wird anschließend die Saugvorrichtung in den Brennstoffbehälter eingebracht, der mit Kraftstoff gefüllt ist, so quillt das Material des Balges um ein bestimmtes Maß auf, wodurch sich sein radialer Durchmesser erweitert und es damit zu einem radialen Verspannen des Mündungsrandes gegen den radial umlaufenden starren Rand des Siebes kommt. Auf diese Weise wird trotz leichter Montage im endgültigen Einbauzustand eine absolut sichere Halterung des Siebes an dem Balg erreicht.

Ein leichtes Ineinanderschieben von Balg und Sieb kann dadurch erreicht werden, daß der umlaufende Rand des Siebes zylindrisch ausgebildet ist und der ebenfalls zylindrisch ausgebildete Mündungsrand des Balges mit seiner radial äußeren Mantelfläche an der radial inneren Mantelfläche des Randes in Anlage ist.

Ist der Balg mit seinem stirnseitigen Ende des Mündungsrandes bis zur Anlage an einem radial nach innen hervorstehenden Anschlag des Siebes in den umlaufenden Rand des Siebes einführbar, so sind keine besonderen Montageeinrichtungen erforderlich, die die korrekte Einbaulage des Balges im Sieb festlegen.

Um zu vermeiden, daß sich das Sieb bevor die Saugvorrichtung in den Brennstoffbehälter eingebracht wird vom Balg wieder lösen kann, kann der Balg mit seinem Mündungsrand in den umlaufenden Rand des Siebes einknüpfbar sein. Vorzugsweise ist dazu am umlaufenden Rand des Siebes ein radial nach innen hervorstehender Ansatz ausgebildet, der in eine entsprechende Ausnehmung des Balges hineinragt. Selbstverständlich können auch mehrere am Umfang verteilte angeordnete Ansätze ausgebildet sein. Damit bei der Montage nicht auf aufwendige Weise ein Ansatz einer bestimmten Ausnehmung zugeordnet werden muß, kann die Ausnehmung eine radial umlaufende Nut sein.

Eine einfache Montage des Saugrohres an dem Balg kann dadurch erreicht werden, daß das Saugrohr bis zur Anlage an einem radial nach innen gerichteten Anschlag in das schlauchartige der Saugöffnung abgewandten Ende des Balges einschiebbar ist. Damit kann auf einfache Weise auf spezielle die Einführtiefe des Saugrohres in den Balg festlegende Montagevorrichtungen verzichtet werden. Vorzugsweise ist dazu der Anschlag radial umlaufend an der Innenwand des schlauchartigen Teils des Balges ausgebildet.

Ausführungsbeispiele der Erfindung sind in der Zeichnung dargestellt und werden im folgenden näher beschrieben. Es zeigen

Figur 1 eine erfindungsgemäße Saugvorrichtung im Halbschnitt,

Figur 2 ein zweites Ausführungsbeispiel einer erfindungsgemäßen Saugvorrichtung im Halbschnitt.

Die in den Figuren dargestellten Saugvorrichtungen sind an einem Brennstoffbehälter eines Kraftfahrzeugs angeordnet, wobei nur ein Ausschnitt des Bodens 1 des Brennstoffbehälters dargestellt ist.

Die Saugvorrichtung besteht aus einem fest im Brennstoffbehälter angeordneten starren Saugrohr 2 und einem daran befestigten Saugknopf 3. Der Saugkopf 3 ist als kegelförmig sich zum Boden 1 hin erweiternder elastischer aus einem Kunststoff gespritzter Balg 4 ausgebildet, an dessen dem Boden 1 zugewandter Saugöffnung 5 ein Sieb 6 angeordnet ist.

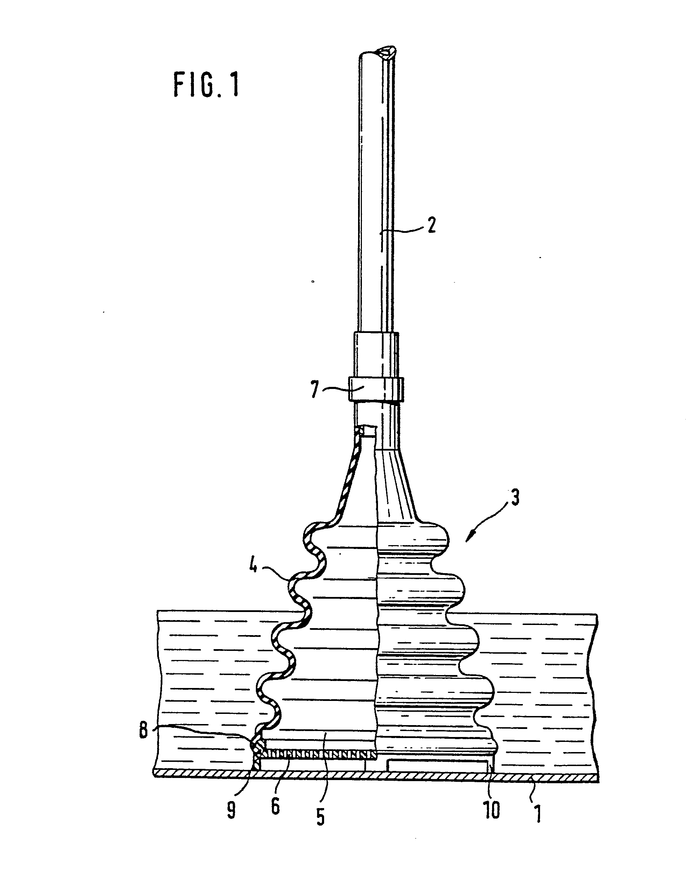

In Figur 1 ist der Balg 4 mit seinem dem Boden 1 abgewandten schlauchartigen Ende auf das bodenseitige Ende des Saugrohres 2 aufgeschoben und durch eine Rohrschelle 7 verschiebefest auf dem Saugrohr verspannt.

Im Bereich der Saugöffnung 5 ist der Balg 4 zylindrisch ausgebildet und weist in der Innenwand des zylindrischen Teils eine radial umlaufende Ringnut 8 auf. In die Ringnut 8 ist ein entsprechender radial umlaufender Rand 9 des aus Kunststoff gespritzten starr ausgebildeten Siebes 6 eingerastet. Das Sieb 6 weist weiterhin zum Boden 1 hin hervorstehende Abstandshalter 10 auf, die die Saugöffnung 5 immer in einem bestimmten geringen Abstand vom Boden 1 halten.

Radial nach außen haben die Abstandshalter 10 eine größere Erstreckung als es der Durchmesser der Saugöffnung 5 ist. Dadurch bilden sie gleichzeitig Anschläge, die die Einschubtiefe des Siebs 6 in die Saugöffnung 5 begrenzen.

Mit seinem dem Boden 1 abgewandten schlauchartigen Ende ist der Balg 4 auf das bodenseitige Ende des Saugrohres 2 bis zur Anlage des Saugrohres 2 an einem radial nach innen gerichteten Anschlag 11 des Balges 4 aufgeschoben und durch eine Rohrschelle 7 verschiebefest auf dem Saugrohr 2 verspannt.

Im Bereich der Saugöffnung 5 ist der Balg 4 an seinem Mündungsrand 12 zylindrisch ausgebildet. Dieser zylindrische Mündungsrand 12 grenzt an eine radial umlaufende Nut 13 des Balges 4. Der Mündungsrand 12 ist von einem radial umlaufenden starren Rand 14 des aus einem in Kraftstoff formbeständigen Material bestehenden Siebs 6 umschlossen.

An dem dem Saugknopf 3 zugewandten Ende des Randes 14 ragen vier gleichmäßig am Umfang verteilte ausgebildete Ansätze 15 radial nach innen in die Nut 13. Die axiale Erstreckung des Mündungsrandes 12 von der Nut 13 bis zu seinem stirnseitigen Ende 16 entspricht dabei dem Abstand zwischen den Ansätzen 15 und einem durch das Sieb 6 gebildeten radial nach innen gerichteten Anschlag 17. Dadurch kann auf einfache Weise der Mündungsrand 12 in den Rand 14 bis zur Anlage des stirnseitigen Endes 16 an dem Anschlag 17 eingeschoben werden, wobei in dieser Einbaulage die Ansätze 15 dann in die Nut 13 einrasten und somit das Sieb 6 an dem Balg 4 festhalten.

Wird nun der zusammengebaute Saugknopf 3 in einen mit Kraftstoff gefüllten Brennstoffbehälter eingebracht, quillt der Balgwerkstoff auf, so daß sich u. a. der Außendurchmesser des Mündungsrandes 12 aufweitet. Da sich der Rand 14 des Siebes 6 aber nicht in seiner Form verändert, verspannt sich der Mündungsrand 12 nach Art einer Presspassung im Rand 14, womit eine sichere Befestigung des Siebes 6 am Balg 4 erreicht wird.

Das Sieb 6 weist weiterhin zum Boden 1 hin hervorstehende Abstandshalter 10 auf, die die Saugöffnung 5 immer in einem bestimmten geringen Abstand vom Boden 1 halten.

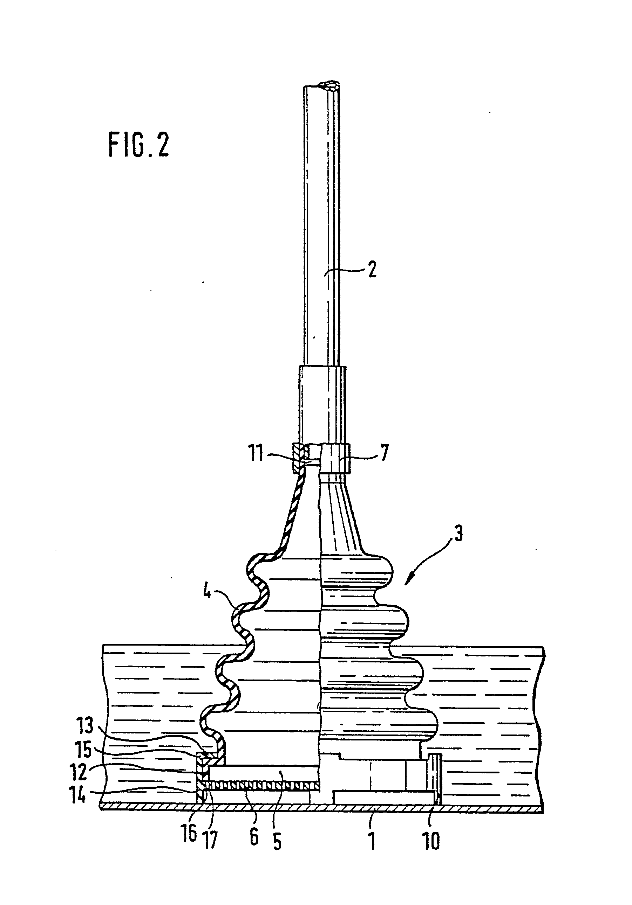

Bei den sowohl in Figur 1 als auch in Figur 2 dargestellten Ausführungsbeispielen besitzt der Balg 4 eine wellförmige Kontur, die eine hohe Elastizität insbesondere in axialer Richtung und damit die federnde Vorspannung bewirkt, mit der der Saugknopf 3 in Anlage am Boden 1 gehalten ist. Durch die wellförmige Ausbildung des Balges 4 kommt es bei dessen Zusammendrücken nicht zu einem Knick- sondern zu einem Biegevorgang der Balgwand, so daß ein hoher Widerstand gegen ein Ausknicken des Balges gegeben ist.

**Patentansprüche**

1. Saugvorrichtung für ein Brennstofförderaggregat, mit einem starren Saugrohr (2), an dem ein Saugkopf (3) angeordnet ist, dessen mit einem Sieb (6) versehene Saugöffnung (5) unter federnder Vorspannung am Boden (1) eines Brennstoffbehälters in Anlage gehalten ist, dadurch gekennzeichnet, daß der Saugkopf (3) als sich kegelförmig erweiternder, elastischer Balg (4) ausgebildet ist, in dessen großer, dem Boden (1) zugewandter Saugöffnung (5) das Sieb (6) angeordnet ist.

2. Saugvorrichtung nach Anspruch 1, dadurch gekennzeichnet, daß der Balg (4) eine wellförmige Kontur besitzt.

3. Saugvorrichtung nach einem der vorhergehenden Ansprüche, dadurch gekennzeichnet, daß der Balg (4) mit seinem Ende geringen Durchmessers auf das Saugrohr (2) aufgeknüpft ist.

4. Saugvorrichtung nach Anspruch 3, dadurch gekennzeichnet, daß der Balg (4) von einer sein Ende geringen Durchmessers umschließenden Rohrschelle (7) auf das Saugrohr (2) verspannbar ist.

5. Saugvorrichtung nach einem der vorhergehenden Ansprüche, dadurch gekennzeichnet, daß der Balg (4) ein Spritzgußteil ist.

6. Saugvorrichtung nach einem der vorhergehenden Ansprüche, dadurch gekennzeichnet, daß am Balg (4) zum Boden des Brennstoffbehälters hin hervorstehende Abstandshalter angeordnet sind.

7. Saugvorrichtung nach Anspruch 6, dadurch gekennzeichnet, daß die Abstandshalter am Balg (4) angeformte Noppen sind.

8. Saugvorrichtung nach einem der vorhergehenden Ansprüche, dadurch gekennzeichnet, daß das Sieb (6) zumindest in seinem radial umlaufenden Randbereich starr ausgebildet und in den Balg (4) einknüpfbar ist.

9. Saugvorrichtung nach Anspruch 8, dadurch gekennzeichnet, daß am Sieb (6) zum Boden (1) des Brennstoffbehälters hin hervorstehende Abstandshalter (10) angeformt sind.

10. Saugvorrichtung nach Anspruch 8, dadurch gekennzeichnet, daß die Innenwand der Saugöffnung (5) des Balges (4) etwa zylindrisch und mit einer radial umlaufenden Ringnut (8) ausgebildet ist, in die das Sieb (6) mit seinem radial umlaufenden Rand (9) einknüpfbar ist.

11. Saugvorrichtung nach Anspruch 9 und 10, dadurch gekennzeichnet, daß die Abstandshalter (10) eine radial nach außen größere Erstreckung aufweisen als der Innendurchmesser der Saugöffnung (5) des Balges (4).

12. Saugvorrichtung nach einem der vorhergehenden Ansprüche, dadurch gekennzeichnet, daß das Sieb (6) ein Spriztgußteil ist.

13. Saugvorrichtung nach einem der Ansprüche 1 und 2, dadurch gekennzeichnet, daß der Balg (4) aus einem in Kraftstoff sein Volumen vergrößerndes Material besteht und am Mündungsrand (12) seiner Saugöffnung (5) von einem radial umlaufenden starren Rand (14) des aus einem in Kraftstoff formbeständigen Material bestehenden Siebs (6) umschlossen ist.

14. Saugvorrichtung nach Anspruch 13, dadurch gekennzeichnet, daß der Balg (4) aus einem in Kraftstoff quellenden Kunststoff besteht.

15. Saugvorrichtung nach einem der Ansprüche 13 und 14, dadurch gekennzeichnet, daß der umlaufende Rand (14) des Siebs (6) zylindrisch ausgebildet ist und der ebenfalls zylindrisch ausgebildete Mündungsrand (12) des Balges (4) mit seiner radial äußeren Mantelfläche an der radial inneren Mantelfläche des Randes (14) in Anlage ist.

16. Saugvorrichtung nach Anspruch 15, dadurch gekennzeichnet, daß der Balg (4) mit seinem stirnseitigen Ende (16) des Mündungsrandes (12) bis zur Anlage an einem radial nach innen hervorstehenden Anschlag (17) des Siebes (6) in den umlaufenden Rand (14) des Siebes (6) einführbar ist.

17. Saugvorrichtung nach einem der Ansprüche 13 bis 16, dadurch gekennzeichnet, daß der Balg (4) mit seinem Mündungsrand (12) in den umlaufenden Rand (14) des Siebs (6) einknüpfbar ist.

18. Saugvorrichtung nach Anspruch 17, dadurch gekennzeichnet, daß am umlaufenden Rand (14) des Siebs (6) ein radial nach innen hervorstehender Ansatz (15) ausgebildet ist, der in eine entsprechende Ausnehmung des Balges (4) hineinragt.

19. Saugvorrichtung nach Anspruch 18, dadurch gekennzeichnet, daß die Ausnehmung eine radial umlaufende Nut (13) ist.

20. Saugvorrichtung nach einem der Ansprüche 13 bis 19, dadurch gekennzeichnet, daß das Saugrohr (2) bis zur Anlage an einem radial nach innen gerichteten Anschlag (11) in das schlauchartige, der Saugöffnung (5) abgewandte Ende des Balges 4 einschiebbar ist.

21. Saugvorrichtung nach Anspruch 20, dadurch gekennzeichnet, daß der Anschlag (11) radial umlaufend an der Innenwand des schlauchartigen Teils des Balges (4) ausgebildet ist.

## Claims

1. Suction device for a fuel delivery system, with a rigid suction pipe (2) on which a suction head (3) is arranged whose suction aperture (5), provided with a screen (6), is held in abutment against the bottom (1) of a fuel tank under spring preload, characterised in that the suction head (3) is constructed as a conically widening elastic bellows (4), and the large suction aperture (5) of said bellows, directed towards the bottom (1), has the screen (6) arranged in it.

2. Suction device according to claim 1, characterised in that the bellows (4) has a corrugated configuration.

3. Suction device according to one of the preceding claims, characterised in that the bellows (4) is fastened with its smaller-diameter end on to the suction pipe (2).

4. Suction device according to claim 3, characterised in that the bellows (4) is clampable on to the suction pipe (2) by a pipe clip (7) surrounding the smaller-diameter end of said bellows.

5. Suction device according to one of the preceding claims, characterised in that the bellows (4) is an injection-moulded part.

6. Suction device according to one of the preceding claims, characterised in that spacer elements projecting towards the bottom of the fuel tank are arranged on the bellows (4).

7. Suction device according to claim 6, characterised in that protuberances moulded on the bellows (4) constitute the spacer elements.

8. Suction device according to one of the preceding claims, characterised in that the screen (6) is constructed to be rigid at least in its radially encircling edge region, and is fastenable into the bellows (4).

9. Suction device according to claim 8, characterised in that spacer elements (10) projecting towards the bottom (1) of the fuel tank are formed on the screen (6).

10. Suction device according to claim 8, characterised in that the inner wall of the suction aperture (5) of the bellows (4) is made substantially cylindrical and provided with a radially encircling annular groove (8) into which the radially encircling edge (9) of the screen (6) can fasten.

11. Suction device according to claims 9 and 10, characterised in that the spacer elements (10) extend radially further outwardly than the inner diameter of the suction aperture (5) of the bellows (4).

12. Suction device according to one of the preceding claims, characterised in that the screen (6) is an injection-moulded part.

13. Suction device according to one of claims 1 and 2, characterised in that the bellows (4) is made of a material which increases in volume in the fueld, and at the mouth edge (12) of its suction aperture (5) is surrounded by a radially encircling rigid edge (14) of the screen (6), this screen being made of a material which is stable in form in the fuel.

14. Suction device according to claim 13, characterised in that the bellows (4) is made of a synthetic plastic material which swells in fuel.

15. Suction device according to one of claims 13 and 14, characterised in that the encircling edge (14) of the screen (6) is constructed with a cylindrical shape, and the likewise cylindrical-construction mouth edge (12) of the bellows (4) abuts with its radially outer wall surface on the radially inner wall surface of the edge (14).

16. Suction device according to claim 15, characterised in that the bellows (4) is adapted to have the end face (16) of its mouth edge (12) inserted into the encircling edge (14) of the screen (6) as far as abutment against a radially inwardly projecting abutment (17) of the screen (6).

17. Suction device according to one of claims 13 to 16, characterised in that the bellows (4) is adapted to be fastened with its mouth edge (12) into the encircling edge (14) of the screen (16).

18. Suction device according to claim 17, characterised in that on the encircling edge (14) of the screen (6) there is formed a radially inwardly projecting lip (15) which projects into a corresponding recess of the bellows (4).

19. Suction device according to claim 18, characterised in that the recess is a radially encircling groove (13).

20. Suction device according to one of claims 13 to 19, characterised in that the suction pipe (2) is insertable into the flexible tubular end of the bellows (4) remote from the suction aperture (5) up to abutment against a radially inwardly directed abutment element (11).

21. Suction device according to claim 20, characterised in that the abutment element (11) is formed in a radially encircling situation on the inner wall of the flexible tubular portion of the bellows (4).

**Revendications**

1. Dispositif d'aspiration par un système d'alimentation en carburant, comportant un tube d'aspiration (2) rigide, sur lequel est montée une tête d'aspiration (3) qui présente une ouverture d'aspiration (5) pourvue d'un filtre (6) et maintenue élastiquement en appui contre le fond (1) d'un réservoir de carburant ; dispositif caractérisé en ce que la tête d'aspiration (3) est constituée par un soufflet élastique (4) de forme évasée en cône, dont l'extrémité la plus large constitue l'ouverture d'aspiration (5) qui contient le filtre (6) et qui est située en regard du fond (1) du réservoir.

2. Dispositif selon la revendication 1, caractérisé en ce que le soufflet (4) présente un profil ondulé.

3. Dispositif selon l'une des revendications précédentes, caractérisé en ce que l'extrémité de moindre diamètre du soufflet (4) est fixée sur le tuyau d'aspiration (2).

4. Dispositif selon la revendication 3, caractérisé en ce que l'extrémité de moindre diamètre du soufflet (4) peut être fixée sur le tuyau d'aspiration (2) au moyen d'un collier de serrage (7), monté autour de l'extrémité précitée du soufflet.

5. Dispositif selon l'une des revendications précédentes, caractérisé en ce que le soufflet (4) est constitué par une pièce moulée par injection.

6. Dispositif selon l'une des revendications précédentes, caractérisé en ce que le soufflet (4) comporte des éléments d'écartement (10) faisant saillie en direction du fond (1) du réservoir de carburant.

7. Dispositif selon la revendication 6, caractérisé en ce que les éléments d'écartement (10) du soufflet (4) sont constitués par des bossages réalisés par moulage sur le soufflet.

8. Dispositif selon l'une des revendications 1 à 7, caractérisé en ce que le filtre (6) est rigide au moins dans la zone de sa bordure périphérique, et peut se monter par enfoncement dans le soufflet (4).

9. Dispositif selon la revendication 8, caractérisé en ce que des éléments d'écartement (10), réalisés par moulage, font saillie sur le filtre (6) en direction du fond (1) du réservoir de carburant.

10. Dispositif selon la revendication 8, caractérisé en ce que la paroi de l'ouverture d'aspiration (5) du soufflet (4) est sensiblement cylindrique, et présente sur sa face interne une gorge périphérique (8) destinée à recevoir un bord périphérique (9) du filtre (6), élastiquement engagé dans la gorge (8).

11. Dispositif selon l'une des revendications 9 ou 10, caractérisé en ce que les éléments d'écartement (10) présentent entre eux, dans le sens radial, une distance supérieure au diamètre interne de l'ouverture d'aspiration (5) du soufflet (4).

12. Dispositif selon l'une des revendications précédentes, caractérisé en ce que le filtre (6) est constitué par une pièce moulée par injection.

13. Dispositif selon l'une des revendications 1 ou 2, caractérisé en ce que le soufflet (4) est constitué d'une matière qui augmente de volume dans le carburant considéré ; et en ce que la bordure d'entrée (12) de l'ouverture d'aspiration (5) du soufflet (4) est destinée à être entourée par une bordure rigide (14) du filtre (6), qui est constitué d'une matière dont le volume et les formes restent immuables dans le carburant.

14. Dispositif selon la revendication 13, caractérisé en ce que le soufflet (4) est constitué d'une matière plastique qui gonfle dans le carburant considéré.

15. Dispositif selon l'une des revendications 13 ou 14, caractérisé en ce que la bordure périphérique (14) du filtre (6) est cylindrique, et en ce que la face externe de la bordure d'entrée (12), également cylindrique, du soufflet (4) est en appui dans le sens radial contre la face interne de la bordure (14) du filtre.

16. Dispositif selon la revendication 15, caractérisé en ce que l'extrémité frontale (16) de la bordure d'entrée (12) du soufflet (4) est destinée à venir en appui sur une butée (17) en saillie radiale vers l'intérieur, prévue à cet effet sur la face interne de la bordure périphérique (14) du filtre (6).

17. Dispositif selon l'une des revendications 13 à 16, caractérisé en ce que la bordure d'entrée (12) du soufflet (4) peut se monter par enfoncement dans la bordure périphérique (14) du filtre (6).

18. Dispositif selon la revendication 17, caractérisé en ce que la bordure périphérique (14) du filtre (6) porte un appendice (15) en saillie radiale vers l'intérieur, qui pénètre dans un évidement correspondant du soufflet (4).

19. Dispositif selon la revendication 18, caractérisé en ce que l'évidement du soufflet (4) est constitué par une gorge périphérique (13).

20. Dispositif selon l'une des revendications 13 à 19, caractérisé en ce qu'on peut enfoncer le tuyau d'aspiration (2) dans l'extrémité tubulaire du soufflet (4), à l'opposé de l'ouverture d'aspiration (5) du soufflet, jusqu'à faire porter le tuyau d'aspiration (2) contre une butée (11) en saillie radiale interne dans l'extrémité tubulaire du soufflet (4).

21. Dispositif selon la revendication 20, caractérisé en ce que la butée interne (11) de l'extrémité tubulaire du soufflet (4) est constituée par une nervure annulaire, en saillie radiale sur la face interne de l'extrémité tubulaire précitée.

FIG.1

FIG.2